# EUROPEAN PATENT APPLICATION

(11) **EP 0 990 830 A1**
(43) Date of publication of application: **05.04.2000**
(21) Application number: 99118026.6
(22) Date of filing: 21.09.1999
(51) Int. Cl.: F16L 33/08

(54) **Hose clamp with safety-improving means**

(30) Priority: 30.09.1998 IT MI982105
(71) Applicant: Antoni S.r.l., 33085 Maniago (IT); Agri Team di Vavassori Valentino, 25030 Adro (IT)
(72) Inventor: Vavassori, Valentino, 25030 Adro (IT)
(74) Representative: Modiano, Guido, Dr.-Ing.

(57) **Abstract**

A hose clamp with safety-improving features comprising a band-like portion (2) which rotatably supports, at one end, a screw (4) which can engage a portion of a thread formed by the band (2), which is closed in a loop. The main characteristic of the invention is constituted by the fact that the free end (2a) of the band (2) protrudes on the opposite side with respect to the head (6) for actuating the screw (4).

## Description

The present invention relates to a hose clamp with safety-improving means.

Hose clamps are generally provided by way of a metal band which has, at one end, a body for accommodating a screw which can turn inside said body about an axis which is substantially parallel to the longitudinal extension of the band.

In order to close the band in a loop and form the clamp or collar, the free end of the band fits between the screw and the end of the band so that the thread of the screw engages a threaded portion, generally formed by way of slots or recesses provided on the inner face of the band.

In the solutions of the prior art, during the tightening of the clamp the free end of the band advances toward the same part where the actuation head is located.

This fact causes various problems and in particular it can be a hindrance during the normal tightening of the clamp, but most of all it leaves a protruding part, i.e., the free end of the band, which lies on the side that can be accessed more easily and can accordingly cause injury to anyone inadvertently passing close to the band because of the protruding portion.

Furthermore, in some situations there is often the problem of being able to act on the band from only one end of the screw, causing considerable difficulties when tightening and loosening the clamp.

The aim of the invention is to eliminate the above-noted drawbacks, providing a hose clamp with safety-improving features which allows to leave the free end of the band in a position which causes neither hindrance nor potential danger to nearby people.

Within the scope of this aim, a particular object of the invention is to provide a hose clamp which can have greater actuation possibilities, thus making it easier to actuate the tightening screw.

Another object of the present invention is to provide a hose clamp which, thanks to its particular constructive characteristics, is capable of giving the greatest assurances of reliability and safety in use.

Another object of the present invention is to provide a hose clamp with safety-improving means which can be obtained easily starting from commonly commercially available elements and materials and is furthermore competitive from a merely economic point of view.

This aim, these objects and others which will become apparent hereinafter are achieved by a hose clamp with safety-improving means, comprising a band-like portion which rotatably supports, at one end, a screw which can engage a portion of a thread formed by said band which is closed in a loop, characterized in that the free end of said band protrudes on the opposite side with respect to the head for actuating said screw.

Further characteristics and advantages of the present invention will become apparent from the following detailed description of a preferred but not exclusive embodiment of a hose clamp with safety-improving means, illustrated only by way of non-limitative example in the accompanying drawings, wherein:
Figure 1 is a perspective view of the hose clamp;
Figure 2 is a schematic elevation view of the hose clamp during tightening;
Figure 3 is a perspective view of the hose clamp with simplified actuation;
Figure 4 is an elevation view of the hose clamp with simplified actuation.

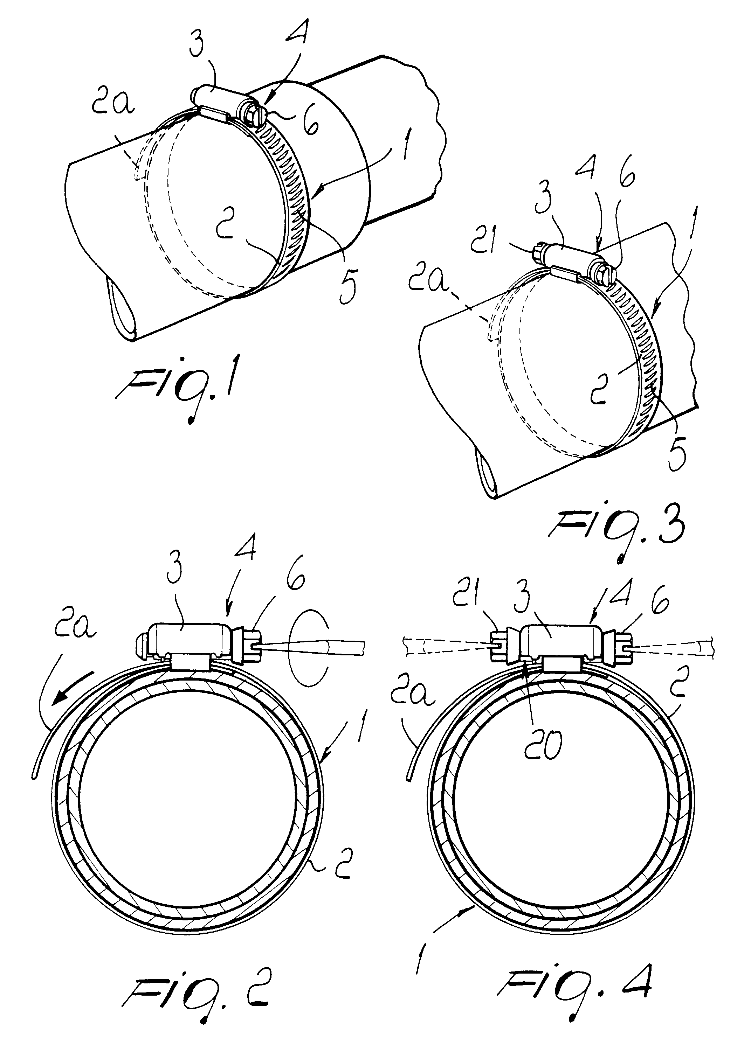

With reference to the above figures, and particularly to Figures 1 and 2, the hose clamp, generally designated by the reference numeral 1, comprises a band-like portion 2, generally made of metallic material, which rigidly supports, at its end, a containment body 3 inside which a screw 4 is rotatably accommodated and engages a threaded portion provided on the band 2, which is closed in a loop; the threaded portion is preferably obtained by means of a series of slots or recesses 5 formed in the band.

The main characteristic of the invention is constituted by the fact that the actuation head 6, which is advantageously hexagonal with a diametrical slit so that it can be actuated both by means of a screwdriver and by means of a wrench, is arranged so that during tightening and loosening the free end of the belt 2, designated by the reference numeral 2a, is arranged on the opposite side with respect to the actuation screw.

By way of this arrangement, the excess part of the band does not protrude toward the user, causing hindrance, and most of all is not left protruding on the side that is normally exposed for a hose clamp.

In order to allow easier tightening, as shown in Figures 3 and 4, it is possible to provide a screw, generally designated by the reference numeral 20, which in addition to having the actuation head 6 also has an auxiliary actuation head 21 arranged at the opposite end of the screw 20, so as to allow to use it equally from either end, thus making it considerably easier and simpler to actuate, actuation being possible from either end according to all the contingent requirements.

From the above description it is thus evident that the invention achieves the intended aim and objects, and in particular the fact is stressed that a hose clamp is provided which, though having the conventional features of hose clamps, fully eliminates the drawbacks typically encountered with hose clamps, providing a product which is extremely practical and safe.

The invention thus conceived is susceptible of numerous modifications and variations, all of which are within the scope of the inventive concept.

All the details may also be replaced with other technically equivalent elements.

In practice, the materials employed, as well as the contingent shapes and the dimensions, may be any according to requirements.

The disclosures in Italian Patent Application No. MI98A002105 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A hose clamp with safety-improving means, comprising a band-like portion (2) which rotatably supports, at one end, a screw (4, 20) which can engage a portion of a thread formed by said band (2) which is closed in a loop, characterized in that the free end (2a) of said band (2) protrudes on the opposite side with respect to the head (6) for actuating said screw (4, 20).

2. The hose clamp according to claim 1, characterized in that said actuation head (6) has a hexagonal shape with a diametrical slit for use both with a screwdriver and with a wrench.

3. The hose clamp according to the preceding claims, characterized in that said screw (4, 20) is rotatably accommodated in a body (3) which is rigidly coupled at said end (2a) of said band (2).

4. The hose clamp according to one or more of the preceding claims, characterized in that it comprises an auxiliary actuation head (21) which is formed on the end of said screw (20) that lies opposite to the end provided with said actuation head (6).
